# FASCICULE DE BREVET EUROPEEN

(11) **EP 2 656 486 B1**
(45) Date de publication et mention de la délivrance du brevet: **12.10.2016**
(21) Numéro de dépôt: 11817385.5
(22) Date de dépôt: 19.12.2011
(51) Int. Cl.: H02K 5/18, H02K 9/02, H02K 9/28, H02K 11/04, H02K 5/20, H02K 9/06

(54) **DISPOSITIF RÉGULATEUR DE TENSION POUR UNE MACHINE ÉLECTRIQUE TOURNANTE, PALIER D'UNE TELLE MACHINE ÉQUIPE D'UN TEL DISPOSITIF ET UNE TELLE MACHINE COMPORTANT UN TEL PALIER**
SPANNUNGSREGLER FÜR EINE ELEKTRISCHE DREHMASCHINE, LAGER FÜR EINE SOLCHE MASCHINE MIT EINER SOLCHEN VORRICHTUNG UND SOLCHE MASCHINE MIT EINEM LAGER
VOLTAGE REGULATOR DEVICE FOR A ROTARY ELECTRIC MACHINE, BEARING FOR SUCH A MACHINE EQUIPPED WITH SUCH A DEVICE AND SUCH A MACHINE COMPRISING SUCH A BEARING

(30) Priorité: 20.12.2010 FR 1060779
(43) Date de publication de la demande: 30.10.2013
(73) Titulaire: Valeo Equipements Electriques Moteur, 94046 Créteil Cedex (FR)
(72) Inventeur: WALME, Benoît, F-78810 Feucherolles (FR); DUGUE, Christophe, F-91120 Palaiseau (FR); LECOLE, Brice, F-75012 Paris (FR); TISSERAND, Pierre, F-94450 Limeil Brevannes (FR)
(74) Mandataire: Ribeil, Alexandre
(86) Numéro de dépôt international: PCT/FR2011/053042
(87) Numéro de publication internationale: WO 2012/085421

(56) Documents cités:
- EP-A1- 0 300 063
- EP-A2- 0 731 550
- FR-A1- 2 744 575
- US-A1- 2007 035 188

## Description

### Domaine de l'invention

La présente invention concerne un dispositif régulateur de tension pour une machine électrique tournante, notamment polyphasée, telle qu'un alternateur et/ou un alterno-démarreur de véhicule automobile.

La présente invention concerne également un palier d'une telle machine électrique tournante équipé d'un tel dispositif régulateur de tension et d'un dispositif de redressement de courant.

La présente invention concerne enfin une telle machine électrique, tournante équipée d'un tel palier.

### Etat de la technique

Il est aujourd'hui connu des alternateurs de véhicules automobiles comportant un stator bobiné entourant un rotor et au moins un bobinage d'excitation du rotor. Ils fonctionnent comme générateur de courant électrique pour alimenter électriquement le réseau de bord d'un véhicule automobile et pour recharger sa batterie. Pour cela, le rotor de l'alternateur est entrainé en rotation par le moteur thermique du véhicule via un dispositif de transmission de mouvement et son bobinage d'excitation est alimenté par un courant électrique, dit courant d'excitation. Le rotor, ainsi magnétisé, génère une force électromotrice de la sorte qu'un courant électrique alternatif est induit dans le bobinage du stator de la machine, configuré pour être relié au réseau de bord et à la batterie par l'intermédiaire d'au moins un pont redresseur de courant alternatif en courant continu.

Il est nécessaire de réguler la tension délivrée au réseau de bord et à la batterie du véhicule pour que les récepteurs du réseau de bord et la batterie ne soient pas détériorés et travaillent de manière correcte et fiable. Pour cela on contrôle le courant d'excitation du bobinage d'excitation.

A cette fin, il est connu des dispositifs régulateurs de tension visant à contrôler le courant d'excitation à l'aide d'un circuit électronique, comportant un ou plusieurs composants électroniques, embarqué au niveau de l'alternateur. Ce circuit dissipe de la chaleur qui doit être évacuée. Ceci est d'autant plus difficilement réalisable que le circuit est situé dans un environnement où il est soumis à des températures élevées, supérieures à 100°C, peu propices à assurer une fonction de refroidissement.

Il a ainsi déjà été proposé des dispositifs régulateurs de tension comprenant un dissipateur de chaleur, permettant de faciliter l'évacuation des calories dégagées par le circuit électronique.

Bien qu'efficaces jusqu'à certains niveaux de températures sous capot, il a été constaté que les dispositifs connus devenaient cependant insuffisants lorsque les conditions de température devenaient plus sévères, par exemple supérieur à 120°, avec l'augmentation de puissance des machines électriques et les exigences de compacité obligeant à positionner le dispositif régulateur de tension et l'alternateur au plus près du moteur thermique du véhicule automobile. L'efficacité du dissipateur est alors cruciale car certains composants du circuit électronique du dispositif régulateur de tension ne doivent pas fonctionner à des températures supérieures à la limite de la technologie du circuit électronique, par exemple à 150° dans le cas d'un circuit électronique sous la forme d'un semi-conducteur. Un dispositif régulateur de tension connu est décrit dans le document US 2007/035188.

### Objet de l'invention

L'invention se propose de résoudre les problèmes précédents et concerne un dispositif régulateur de tension pour une machine électrique tournante, notamment alternateur et/ou alterno-démarreur de véhicule automobile, comprenant les caractéristiques énoncées dans la revendication 1.

L'orientation donnée au flux d'air permet ainsi d'améliorer son débit en lui conférant une trajectoire plus directe et en lui permettant d'éviter les obstacles, en particulier les obstacles représentant des points chauds tels qu'un pont redresseur de courant. On augmente de la sorte la capacité d'évacuer les calories grâce à la quantité d'air balayant les ailes du dissipateur et on obtient un échange thermique plus efficace, permettant de refroidir le ou les composants électroniques, même dans un environnement sévère en température, ceci pour un dissipateur dont la fabrication demeure facilement réalisable et sans modifier de manière profonde le dispositif régulateur de tension ainsi plus fiable.

On dispose de la sorte d'un alternateur plus robuste car le dispositif de régulation est plus sensible à l'élévation de température que le ou les ponts redresseurs de courant qui peuvent fonctionner à des températures limites données par la technologie par exemple de l'ordre de 225°.

Selon d'autres caractéristiques procurant d'autres avantages et prises isolément ou en combinaison :
- le dissipateur comprend une base, en relation d'échange thermique avec le ou lesdits composants électroniques, et lesdites ailes s'étendent à partir de ladite base,
- la base est en contact direct avec le ou les dits composants électroniques via des moyens de fixation, tels que de la colle ou un soudage,
- la base est en contact indirect avec le ou les composants électroniques par l'intermédiaire d'un substrat intercalé entre la base et le ou lesdits composants électroniques ;
- lesdites ailes s'étendent sensiblement perpendiculairement par rapport à ladite base, ledit dissipateur présentant un axe D, parallèle aux ailes, orienté vers ladite zone de dépression,
- le support comprend en outre un porte-balais muni d'au moins un logement, dit logement porte-balai, orienté selon une direction D', apte à accueillir un balai permettant d'établir une liaison électrique avec un rotor de la machine électrique,
- l'axe D du dissipateur et l'axe D' du logement porte-balai forment un angle supérieur à 10°,
- l'axe D du dissipateur et l'axe D' du logement porte-balai forment un angle compris entre 40 et 90°, notamment de l'ordre de 66 °.

On pourra prévoir que le dissipateur comprend deux dites ailes de dissipation s'étendant depuis des bords latéraux de la base, de façon à présenter un profil en U, par exemple obtenu par pliage. Le dissipateur comprend alors, éventuellement, au moins une ailette supplémentaire de dissipation de chaleur placée, par exemple de façon médiane, entre lesdites deux ailes. La ou lesdites ailettes sont rapportées par exemple par soudage sur la base. En variante, elles pourront être insérées dans une ou des rainures prévues sur la base.

Le dissipateur de chaleur et la ou les ailettes supplémentaires sont en matériau caloporteur.

Grâce à cette ou ces ailettes supplémentaires, on améliore encore la dissipation de chaleur. Selon ce mode de mise en oeuvre de l'invention, on pourra utiliser les caractéristiques suivantes :
- la ou lesdites ailettes se prolongent axialement vers l'intérieur au-delà de la base,
- la ou lesdites ailettes présentent un prolongement adapté à être placé en regard d'une ouverture centrale d'entrée d'air de ladite machine électrique,
- ledit prolongement est apte à être placé entre ledit support et l'ouverture centrale de ladite machine électrique,
- la ou lesdites ailettes présentent une forme globalement en forme de L ;
- le dissipateur comprend plusieurs ailettes supplémentaires de dissipation de chaleur,
- la ou lesdites ailettes supplémentaires sont dans la même matière que le dissipateur.

De façon alternative ou complémentaire, le support pourra aussi comprendre une première partie, où le dissipateur est situé, ladite première partie présentant un bord latéral équipé du ou desdits porte-balais. Une ou des fentes sont prévues à travers ledit support entre ladite première partie et le ou lesdits porte-balais. Ces fentes permettent le passage de l'air et on améliore ainsi le refroidissement, y compris au niveau des logements porte-balais. Plus précisément on refroidi encore plus les traces électriques reliant le porte-balais au circuit électronique du dispositif régulateur de tension ce qui permet de diminuer encore la température du circuit électronique. On diminue également la température des bagues collectrices du collecteur que comporte la machine électrique tournante.

Toujours de façon alternative ou complémentaire, ledit dissipateur est réalisé en cuivre et se trouve en contact direct ou indirect avec le ou les composants. On améliore encore de la sorte la dissipation de chaleur.

La ou les ailettes supplémentaires sont en cuivre.

L'invention concerne aussi un palier de machine électrique tournante équipé d'un dispositif régulateur tel que décrit plus haut et une machine électrique tournante équipée d'un tel palier. Le palier pourra être équipé, en outre, d'un dispositif de redressement du courant produit par la machine électrique pour formation d'un agencement de redressement de courant comportant une ouverture centrale, ladite zone de dépression étant située au niveau de la dite ouverture.

Cette dernière se trouve, notamment, dans le prolongement d'une ouverture centrale du palier, lesdites ouvertures centrales étant destinées à permettre le passage de l'arbre de la machine auquel appartient le dispositif régulateur de tension.

L'invention sera mieux comprise et d'autres avantages apparaîtrons à la lumière de la description suivante qui n'est donnée qu'à titre indicatif et qui n'a pas pour but de la limiter, accompagnée des dessins joints.

### Brève description des dessins

- la figure 1 illustre selon un plan de coupe radiale un exemple de réalisation d'une machine électrique selon l'invention,
- la figure 2 est une vue en perspective d'une partie d'extrémité axiale d'une variante de réalisation de ladite machine, représentée de façon éclatée,
- la figure 3 est une vue de dessus d'un exemple de réalisation d'un dispositif de commande selon l'invention,
- la figure 4 est une vue en coupe effectuée selon l'axe IV-IV illustré à la figure 3,
- la figure 5 est une vue en perspective illustrant une variante de réalisation du dispositif de commande selon l'invention
- la figure 6 est une vue de dessus en perspective d'un capot de protection configuré pour optimiser le flux d'air dans la zone du dispositif régulateur de tension ;
- la figure 7 est une vue de dessous en perspective du capot de la figure 6,
- la figure 8 est une vue en perspective d'une variante du dissipateur de chaleur à aile de dissipation de chaleur en forme de peigne.

### Description d'exemples de réalisation de l'invention

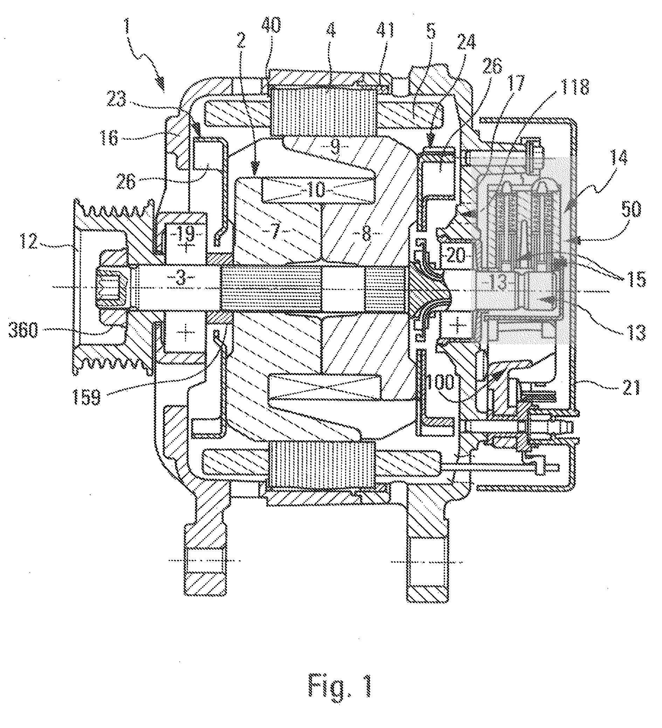

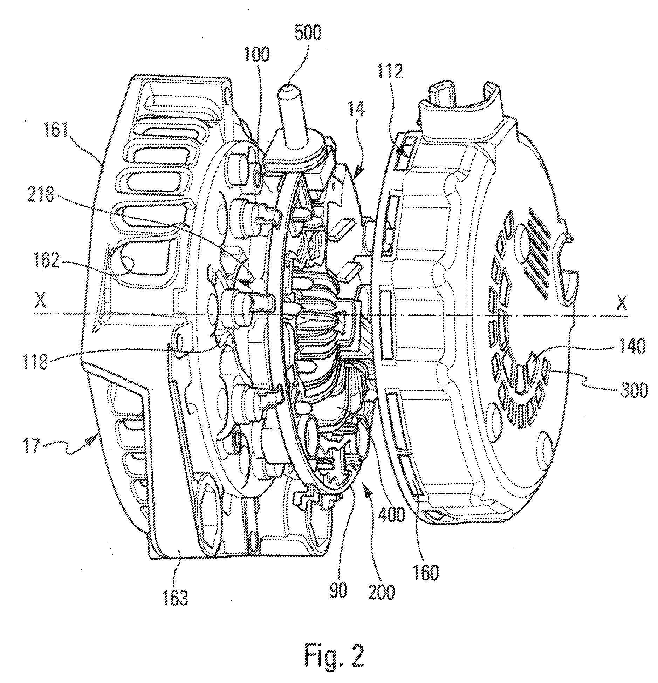

Nous allons tout d'abord décrire un exemple de machine électrique tournante dans lequel un dispositif régulateur conforme à l'invention peut être employé, ceci en relation avec les figures 1 et 2.

Comme illustré à la figure 1, ladite machine, notamment prévue polyphasée, comporte, par exemple, un carter 1 et, à l'intérieur de celui-ci, un arbre 3, un rotor 2 solidaire en rotation de l'arbre 3 et un stator 4 bobiné, qui entoure le rotor 2 avec présence d'un faible entrefer, non-visible sur la figure.

Ce stator 4 comporte, par exemple, un corps en forme d'un paquet de tôles doté d'encoches équipées d'isolant d'encoche pour le montage du bobinage du stator 4. Celui-ci comprend plusieurs phases, qui comportent chacune au moins un enroulement formant de part et d'autre du corps du stator un chignon 5. Les sorties des phases sont connectées, par exemple, en triangle ou en étoile et reliées à un connecteur appartenant à un dispositif de redressement d'un courant alternatif en un courant continu, servant à alimenter le réseau de bord et à recharger la batterie du véhicule automobile.

Le rotor, prévu inducteur par l'intermédiaire d'au moins un bobinage inducteur 10 associé au rotor, crée un courant induit alternatif dans le bobinage du stator 4 lorsque l'arbre 3 tourne. Ce courant est redressé en courant continu par l'intermédiaire du dispositif de redressement de courant alternatif en courant continu.

Le rotor est ici un rotor à griffes, comme décrit par exemple dans les documents US 2002/0175589 A1 et EP 0 454 039 A1, comprenant deux roues polaires 7, 8 axialement juxtaposées et présentant chacune un flasque transversal pourvu à sa périphérie externe de dents 9 de forme trapézoïdale dirigées axialement vers le flasque de l'autre roue polaire, la dent d'une roue polaire pénétrant dans l'espace existant entre deux dents 9 adjacentes de l'autre roue polaire. Un bobinage d'excitation 10 est implanté axialement entre les flasques des roues 7, 8. Ce bobinage 10 est porté par un noyau cylindrique en deux parties appartenant chacune à l'un des flasques des roues 7, 8. En variante le noyau est monobloc en étant distinct des flasques des roues 7, 8. L'arbre 3 pourra présenter des portions moletées pour la fixation des roues polaires 7, 8

Lorsque le bobinage d'excitation 10 est alimenté électriquement, le rotor 2, en matériau ferromagnétique, est magnétisé et devient un rotor inducteur avec formation de pôles magnétiques Nord/Sud au niveau des dents 9 d'orientation axiale des roues polaires 7, 8.

En variante, le rotor peut être à pôles saillants, comme décrit par exemple dans le document WO 02/054566, et comporter alors plusieurs bobinages d'excitation enroulés chacun autour d'un tel pôle et montés en série comme visible dans les figures 1 et 2 de ce document.

En variante le rotor comporte deux roues polaires à griffes et deux bobinages d'excitation comme décrits dans le document FR 2 857 517

Toujours en variante, le rotor est également muni d'aimants permanents.

L'arbre 3 du rotor 2 porte, dans le mode de réalisation de la figure 1, à son extrémité avant une poulie 12 appartenant à un dispositif de transmission de mouvements entre l'alternateur et le moteur thermique du véhicule automobile. Ledit dispositif de transmission comprend au moins une courroie, non représentée, par exemple entrainée par un vilebrequin du moteur thermique.

Dans l'exemple illustré, l'arbre 3 du moteur porte à son extrémité arrière des bagues collectrices 13 reliées par des liaisons filaires aux bornes du ou des bobinages d'excitation 10 du rotor 2 du type de ceux décrits dans le document FR 2 710 200, par exemple par l'intermédiaire d'un collecteur. Des balais 15 sont disposés de façon à frotter sur les bagues collectrices 13. Ces balais sont logés dans un porte-balais 50 appartenant, dans l'exemple de réalisation illustré, au dispositif régulateur de tension 14 conforme à l'invention qui sera décrit plus loin. En pratique la bague collectrice la plus proche de l'extrémité arrière de l'arbre 3 est reliée à la masse.

Le carter 1 est, par exemple, en deux parties, à savoir un flasque avant 16, appelé palier avant, adjacent à la poulie 12 et un flasque arrière 17, appelé palier arrière, portant dans ce mode de réalisation le dispositif régulateur de tension 14 et le dispositif de redressement de courant alternatif en courant continu.

Les paliers 16, 17 sont métalliques, ici en Aluminium. Ils sont de forme creuse dans cette réalisation. En variante l'un au moins des paliers est de forme plate. Ces paliers 16, 17 pourront comporter chacun, centralement, un roulement à billes respectivement 19 et 20 pour le montage à rotation de l'arbre 3. Dans le mode de réalisation de la figure 1 une entretoise 159 est intercalée entre la bague interne du roulement 19 et la roue polaire 7, la poulie 12 étant en appui sur la bague interne du roulement 19 en étant fixée sur l'extrémité avant de l'arbre 3 via un écrou 360. Ces paliers 16, 17 sont ajourés pour permettre le refroidissement de l'alternateur par une circulation d'air engendrée par la rotation d'au moins un ventilateur. Ces paliers 16, 17 présentent chacun une ouverture centrale pour passage de l'extrémité axiale concernée de l'arbre 3.

Ce ventilateur est, dans un mode de réalisation non représenté, externe en étant adjacent à la poulie 12. Dans la figure 1 le ventilateur est interne en étant logé dans le carter. A cette fin, le rotor 2 porte au moins à l'une de ses extrémités axiales un ventilateur destiné à assurer cette circulation de l'air. Dans l'exemple représenté, un ventilateur noté 23 est prévu sur la face frontale avant du rotor et un autre ventilateur 24, plus puissant, sur la face arrière, chaque ventilateur étant pourvu d'une pluralité de pâles 26.

En variante, pour générer le flux d'air servant au refroidissement du moteur, il pourra être utilisé une turbine ou pompe centrifuge tel que cela est décrit dans le document FR 2 744 575.

En variante encore, le palier équipé du dispositif régulateur de tension pourra être refroidi par air tandis que l'autre palier est refroidi par eau.

Dans le cas de palier équipé de ventilateurs, les paliers 16, 17 comportent un fond globalement d'orientation transversale par rapport à l'axe de l'arbre 3 constituant l'axe de rotation et de symétrie axiale de la machine. Les fonds sont dotés d'une pluralité d'entrée d'air et sont prolongés chacun à leur périphérie externe par une jupe globalement d'orientation axiale par rapport à l'axe de l'arbre 3. La jupe est dotée d'une pluralité d'ouvertures de sortie d'air. Autrement dit, grâce aux ventilateurs, il est engendré une circulation de l'air entre les ouvertures d'entrée et de sortie d'air, le flux d'air pénétrant dans l'alternateur de façon axial pour en sortir de façon radiale, ce qui permet de refroidir, notamment, les chignons 5 du bobinage du stator 4. Les ouvertures d'entrée d'air du palier arrière sont, par exemple, globalement de forme trapézoïdale.

Il pourra être également prévu un capot de protection ajouré 21 qui coiffe le dispositif de redressement de courant et le dispositif régulateur de tension 14.

On notera (Figure 1) que le corps du stator est monté dans les jupes des paliers 16, 17 via un joint élastique 40 en appui sur un épaulement de la jupe du palier 16 et via des tampons élastiques 41 montés dans la jupe du palier 17 épaulé à cet effet. En variante le corps du stator 4 est emmanché à force dans les jupes des paliers 16, 17

Selon les modes de réalisations illustrés, l'un des paliers, ici le palier arrière, pourra porter le dispositif de redressement de courant et/ou le dispositif régulateur de tension 14, partiellement visibles à la figure 1, pour formation d'un ensemble appelé agencement de redressement de courant. En variante c'est le palier avant qui porte le dispositif de redressement de courant et/ou le dispositif régulateur de tension comme visible à la figure 1 du document FR 2 744 575.

Une telle disposition permet de disposer d'une machine électrique et d'un dispositif de redressement de courant et/ou d'un dispositif régulateur de tension formant un ensemble mécanique prêt à monter dans le véhicule. En outre, elle permet de refroidir le dispositif de redressement et/ou le dispositif régulateur de tension par le flux d'air généré par le ou lesdits ventilateurs.

Ledit dispositif de redressement de courant comprend ici un pont de redressement de courant, par exemple triphasé, hexaphasé ou pentaphasé. En variante, il pourra être prévu plusieurs ponts de redressement de courant.

Le pont comporte, par exemple, un premier dissipateur de chaleur, appelé dissipateur négatif, portant des premiers éléments de redressement de courant, tels que des diodes ou des transistors du type MOSFET, un deuxième dissipateur de chaleur, appelé dissipateur positif, portant des seconds éléments de redressement de courant, tels que des diodes ou des transistors du type MOSFET, et un connecteur comportant un corps en matière électriquement isolante dans lequel sont noyées des branches électriquement conductrices. Ces branches sont localement apparentes et relient chacune un premier élément de redressement de courant d'un des dissipateurs à un second élément de redressement de courant de l'autre dissipateur, lesdits premier et second éléments de redressement étant à des potentiels différents. Chacune des sorties de phase de l'alternateur ou de l'alterno-démarreur est connectée électriquement à une branche du connecteur en un point milieu prévu entre les premiers et second éléments de redressement reliés à ladite branche.

Dans une forme de réalisation représentée par exemple dans le document FR 2 754 650, les branches du connecteur comportent des pattes de connexion à une sortie de chacune des phases et deux des branches sont prolongées et dotées à leur extrémité libre d'un demi anneau pour connexion au dispositif régulateur de tension 14. Autrement dit, comme détaillé plus loin, le dispositif régulateur de tension conforme à l'invention est dans un mode de réalisation connecté à des branches conductrices reliées à deux des phases du moteur. En variante, comme visible à la figure 1 de ce document FR 2 754 650 deux des branches sont prolongées et dotées à leur extrémité libre d'un anneau pour connexion au dispositif régulateur de tension 14.

Le dissipateur de chaleur négatif, est constitué par exemple par l'un des paliers 16, 17 en Aluminium du carter 1 de l'alternateur relié à la masse du véhicule automobile, tandis que le dissipateur de chaleur positif par exemple en Aluminium, est porté à isolation électrique par ce palier et est muni d'une borne, appelée borne B+, destinée à être reliée à la borne positive de la batterie du véhicule via un câble.

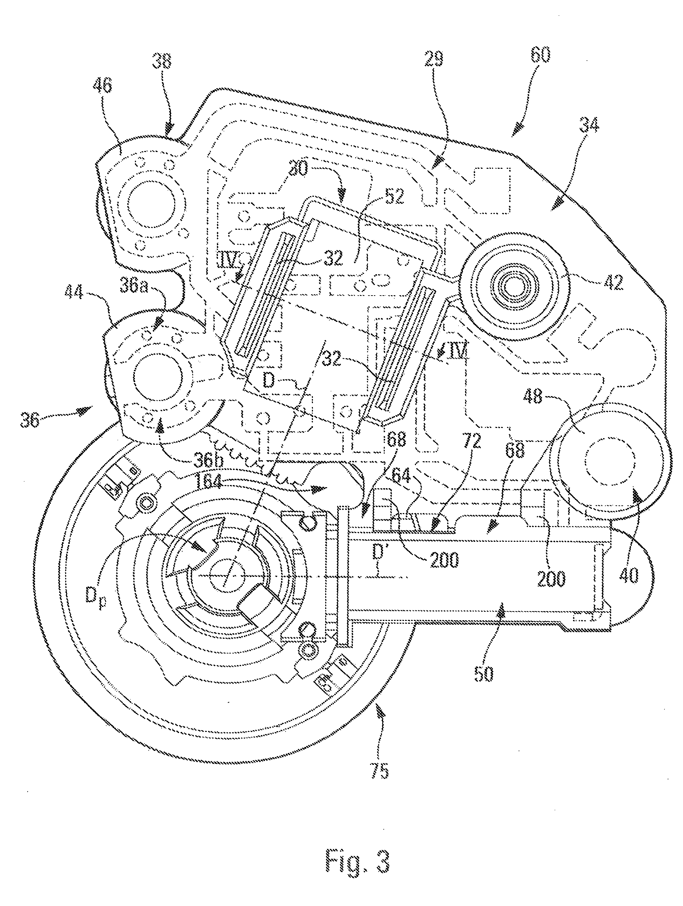

Les diodes de redressement de courant sont, par exemple, emmanchées à force respectivement dans le dissipateur négatif et dans le dissipateur positif comme visible par exemple dans la figure 14 du document WO 02/054566 ou dans la figure 3 du document WO 02/093717. Le pont de la figure 1 est ici du type de la figure 3 du document WO 02/093717.

Dans ce mode de réalisation, comme décrit dans le document FR 2 807 583 auquel on se reportera, le dissipateur de chaleur positif pourra également comporter, à son extrémité circonférentielle voisine de la borne B+, un prolongement en forme d'oreille trouée pour contact électrique avec le dispositif régulateur de tension et liaison électrique avec la borne positive de la batterie via la borne B+ de ce dissipateur de chaleur positif.

Bien entendu le nombre d'éléments de redressement de courant dépend des applications et notamment du nombre de phases et de ponts redresseur de courant de la machine. Ainsi il est prévu trois diodes négatives et trois diodes positives dans le mode de réalisation du document WO 02/093717 relatif à un alternateur du type triphasé comportant un pont redresseur de courant. Dans le document US 7 019 424 il est prévu six diodes négatives et six diodes positives et deux ponts redresseurs de courant, l'alternateur étant du type double triphasé.

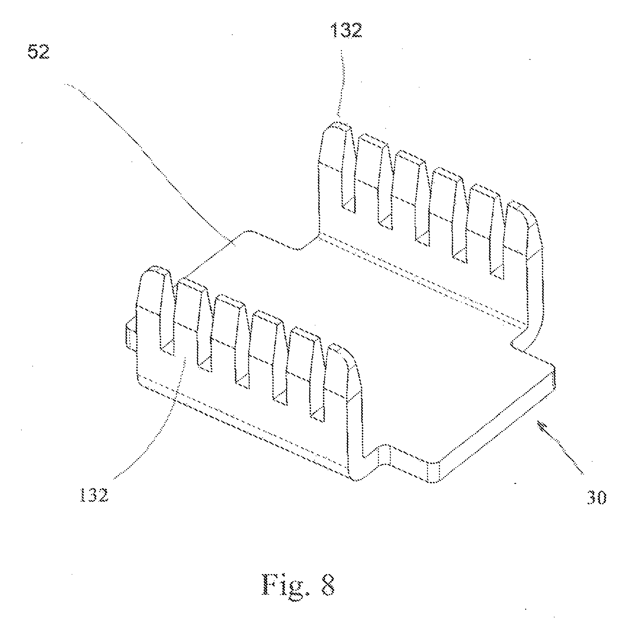

La figure 2, qui est une vue en perspective analogue à la figure 8 du document US 7 019 424 montre ce type de réalisation.

Ainsi, selon ce mode de réalisation de l'invention, on pourra utiliser un capot de protection 112, ici en matière plastique, doté d'ouvertures 140, 300 et 160 de passage d'air.

Le dispositif de redressement de courant comprend un pont redresseur de courant 200 alternatif en courant continu comportant un dissipateur de chaleur positif 100, notamment doté d'ailettes 400 et/ou d'une borne 500 constituant la borne B+, un connecteur 90 doté de pattes (non référencées), par exemple saillantes en forme de pinces pour fixation par sertissage des sorties de phases du bobinage du stator, et un dissipateur de chaleur négatif constitué par le palier arrière 17. Ce palier comporte, par exemple, un fond transversal par rapport à l'axe de symétrie axiale X-X confondu avec l'axe de l'arbre 3 de la figure 1. Ce fond est doté à sa périphérie externe d'ouvertures de montage des diodes. Sa périphérie interne présente, notamment, une pluralité d'ouvertures d'entrée d'air dont l'une est visible en 118. Ces ouvertures 118, ici globalement de forme trapézoïdale, sont délimitées latéralement par des bras séparant deux ouvertures 118 consécutives et/ou intérieurement par un anneau central délimitant une ouverture centrale 218 pour passage du collecteur équipé des bagues collectrices 13 et de l'extrémité arrière de l'arbre du rotor. L'axe X-X passe par le centre de l'ouverture 218. Ce fond est prolongé à sa périphérie externe par une jupe 161 d'orientation axiale par rapport à l'axe X-X munie d'ouvertures de sortie d'air 162 de forme oblongue. Il est prévu également une oreille de fixation 163 sur une partie fixe du véhicule. L'exemple de dispositif régulateur de tension 14 conforme à l'invention illustré à cette figure est intercalé entre les extrémités circonférentielles du dissipateur positif 100 prévu troué pour le montage des diodes positives.

Le dispositif régulateur de tension 14 appartient à l'agencement de redressement de courant comportant le palier arrière 17 et le dispositif de redressement de courant.

On donne maintenant une description détaillée du dispositif de régulation de tension 14 conforme à l'invention.

Comme illustré aux figures 3 à 5, il comprend un ou plusieurs composants électroniques 28, dit(s) dans la suite circuit électronique de commande, aptes à participer à la commande de ladite machine électrique, un dissipateur de chaleur 30, présentant des ailes de dissipation de chaleur 32, parallèles, et un support 34 sur lequel ledit dissipateur 32 est positionné. Ledit dissipateur est en relation d'échange thermique avec le circuit électronique de commande 28 afin d'assurer son refroidissement, notamment, par l'intermédiaire du flux d'air traversant le palier arrière 17. Le circuit électronique de commande 28 est constitué, par exemple, d'un circuit à semi-conducteur ou puce électronique, notamment du type ASIC. Il assure une régulation de la tension délivrée au réseau de bord par la machine électrique tournante. Pour cela, il contrôle, par exemple, le courant délivré au bobinage d'excitation du rotor, notamment, en fonction de différentes données d'entrée telles que, entres autres, la tension disponible aux bornes de la batterie, la vitesse de rotation du moteur thermique et/ou la température du moteur thermique.

Le circuit électronique de commande 28 pourra aussi recevoir dans ce mode de réalisation des informations sur deux des phases du bobinage du stator pour que le régulateur travaille dans de bonnes conditions par suppression des tensions parasites comme indiqué par exemple dans le document FR 2 649 797. Il pourra encore permettre un fonctionnement de la machine en mode alterno-démarreur comme décrit dans le document FR 2 745 444, qui ainsi qu'on le sait est un alternateur réversible permettant également de transformer de l'énergie électrique en énergie mécanique notamment pour démarrer le moteur thermique.

Ledit circuit 28 est relié à différentes bornes de connexion du dispositif régulateur 14 par l'intermédiaire de traces électriques 29 noyées dans le support 34, illustrées en pointillées à la figure 3.

Il s'agit, par exemple, d'une borne de connexion 36 en deux demi-anneaux 36a, 36b, destinée à être connectée à la borne correspondante du dispositif de redressement, liée à deux des phases du moteur comme décrit dans le document FR 2 754 650 précité. Selon ce mode de réalisation, le support 34 du régulateur 14 pourra présenter des saillies et des renfoncements complémentaires (non-représentés) pour isoler les demi-anneaux et créer un passage pour une vis de fixation.

Il s'agit encore d'une borne de connexion 38, destinée à être reliée électriquement de manière précitée au dissipateur de chaleur positif 100 au voisinage de la borne B+ de celui-ci, et/ou d'une borne de connexion 40, destinée à être fixée sur une cheminée du palier 17 (visible à la figure 1) pour liaison électrique avec la masse via cette cheminée.

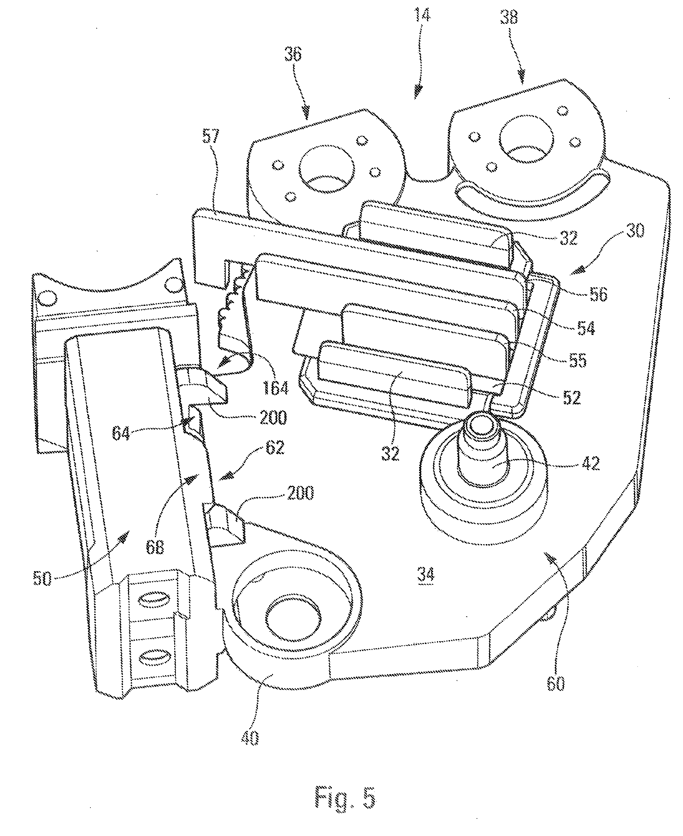

Le régulateur pourra encore comporter un connecteur 42 relié par une ou plusieurs des traces électriques 29 au circuit électronique de commande 28 pour, notamment, des prises d'information sur la vitesse de rotation et la température du moteur thermique du véhicule automobile via des liaisons filaires reliant le connecteur 42 à une unité électronique de contrôle du moteur thermique du véhicule. Ledit connecteur 42 est apte à être relié directement à un conducteur électrique externe au dispositif. En variante il est relié au capot comportant pour ce faire au moins une trace électrique noyée dans le corps du capot en matière électriquement isolante et reliée à un connecteur porté par le capot. Dans ce cas comme visible dans les figures 3 et 5 le connecteur 42 consiste en une borne. Bien entendu en variante il est prévu deux bornes. Tout dépend des applications et du nombre d'informations reçues par le dispositif 14.

Le dispositif régulateur conforme à l'invention comporte, par exemple trois oreilles de fixation 44, 46, 48 trouées centralement pour fixation du régulateur au palier à l'aide de vis. Lesdites borne de connexions 36 à deux des phases du moteur, 38 à la borne B+ et 40 à la masse sont, par exemple, respectivement prévues au niveau desdites oreilles 44, 46, 48. En variante, de manière précitée, il est prévu deux oreilles pour chacune des connexions à l'une phase au lieu d'une seule oreille 44. Ces oreilles pourront conserver une localisation standard les unes par rapport aux autres d'une génération de dispositif régulateur à l'autre afin de pouvoir les fixer sur un même support.

Dans l'exemple illustré où le dispositif régulateur est muni d'un porte-balais 50, l'oreille 48 destinée à être fixée au palier 17 est la plus proche du porte-balais, tandis que les deux autres oreilles 44, 46 sont à proximité l'une de l'autre et/ou adjacentes au circuit électronique de commande 28, l'oreille 44 correspondant à la borne de connexion 36 à deux des phases de la machine électrique étant la plus proche du porte-balais 50 que l'oreille 46 correspondant à la borne de connexion à la borne B+.

Ledit circuit de commande 28 est situé, par exemple, entre le connecteur 42 et les deux oreilles 44, 46 à proximité l'une de l'autre, de même que le dissipateur 30. Celui-ci se trouve, notamment, au dessus du circuit de commande 28.

Il ressort de ce qui précède que le dispositif régulateur 14 selon l'invention est adapté à se monter en lieu et place de celui de la figure 8 du document US 7 019 424 précité, avantageusement sans modifications des liaisons électriques du dispositif 14 avec le dissipateur positif 100, avec les deux sorties de phases du connecteur et avec les deux phases du connecteur 90.

Ledit support 34 est en matériau isolant tel que, par exemple, du PPS. Le dissipateur 30 est, notamment, surmoulé dans le support 34.

Selon l'invention, ledit support 34 est apte à être monté sur la machine électrique de façon à ce que les ailes 32 du dissipateur 30 puissent orienter un flux d'air vers une zone de dépression Dp prévue entre ledit support et ladite machine. On améliore de la sorte la dissipation thermique.

La zone de dépression est définie, par exemple, par le dissipateur positif 100 et le support 34 du régulateur 14, qui prolonge circonférentiellement ledit dissipateur positif 100 en définissant une ouverture centrale, dite d'aspiration d'air, non visibles sur les figures, située dans le prolongement axial de l'ouverture centrale 218 du palier 17. Ladite zone de dépression se situe, notamment au niveau de ladite ouverture d'aspiration d'air.

En particulier, lesdites ailes 32 sont orientées pour diriger le flux d'air radialement, c'est-à-dire, vers l'axe X-X du rotor 3 de la machine électrique et vers l'ouverture centrale d'aspiration d'air. Ce flux d'air et ensuite dirigé axialement vers l'ouverture 218. On peut noter qu'à la figure 3, on voit un collecteur 75 du type de celui décrit dans le document FR 2 710 200. Ce collecteur 75 est monté sur l'extrémité arrière de l'arbre 3 et traverse l'ouverture centrale 218 du palier 17 dans laquelle est montée, de manière connue, une bague (non référencée à la figure 1) intercalée radialement entre le bord de l'ouverture 218 et la périphérie externe de la bague externe du roulement 20. Cette bague comporte un fond (non référencé à la figure 1) traversé par le collecteur. Ce fond est ajouré et comporte à cet effet une pluralité d'ouvertures circonférentiellement de forme oblongue. La bague permet d'absorber les phénomènes de dilatation se produisant entre le palier 17 et le roulement 20.

Le dissipateur 30 comprend, par exemple, une base 52, en relation d'échange thermique avec le circuit électronique de commande 28. Lesdites ailes 32 s'étendent alors à partir de ladite base 52. Ledit circuit de commande 28 est, notamment, centré sur ladite base. Le rapport de surface dudit circuit 28 sur celui de ladite base 52 est, par exemple, compris entre 30 et 60%.

Lesdites ailes 32 pourront s'étendre sensiblement perpendiculairement par rapport à ladite base 52. Ledit dissipateur 30 présente un axe D, parallèle aux ailes 32, orienté vers ladite zone de dépression. Autrement dit, l'axe D est, par exemple, orienté radialement par rapport à l'axe du rotor.

Le dispositif régulateur conforme à l'invention ne comporte pas nécessairement de porte-balais comme décrit dans le document FR 2744575 précité le bobinage d'excitation associé au rotor étant alors fixe. Cependant, comme déjà dit, il pourra en être prévu, comme dans le mode de réalisation illustré.

Autrement dit, le support 34 pourra comprendre un porte-balais 50 muni d'au moins un logement, dit logement porte-balai, orienté selon une direction D', apte à accueillir un balai permettant d'établir une liaison électrique avec le rotor de la machine électrique. En l'occurrence, il est prévu deux logements, situés l'un au dessus de l'autre comme visible à la figure 5 et présentant la même orientation D', l'un accueillant un balai destiné à être relié à une source délivrant le courant d'excitation du rotor, tel que déterminé par le circuit électronique de commande 28, et l'autre accueillant un balai destiné à être relié à la masse comme visible à la figure 1.

Ledit support 34 est configuré de façon à pouvoir être fixé en permettant une orientation du ou des logements porte-balais 50 en direction de l'axe du rotor et de l'ouverture centrale d'aspiration d'air c'est-à-dire, en direction de ladite zone de dépression en correspondance avec l'ouverture centrale 218 du palier 17.

Ledit porte-balai 50 est, par exemple, de forme globalement parallélépipédique. Les logements sont, notamment, de section globalement rectangulaire pour montage dans chacun de ceux-ci d'un balai. Les balais pourront être sollicités radialement par un ressort en direction de la bague collectrice 3 concernée. Chaque balai est relié, par exemple à l'aide d'une tresse électriquement conductrice, à une borne électrique elle-même reliée électriquement à une des traces électriques 29 noyées dans le support 34. Ces traces sont reliées électriquement au circuit de commande électronique 28 du régulateur 14.

L'axe D du dissipateur 30 et l'axe D' du ou des logements porte-balais forment, par exemple, un angle supérieur à 10° tel qu'un angle compris entre 40 et 90°, notamment un angle d'environ 66°.

Des résultats excellents ont été obtenus pour un angle de 66°.

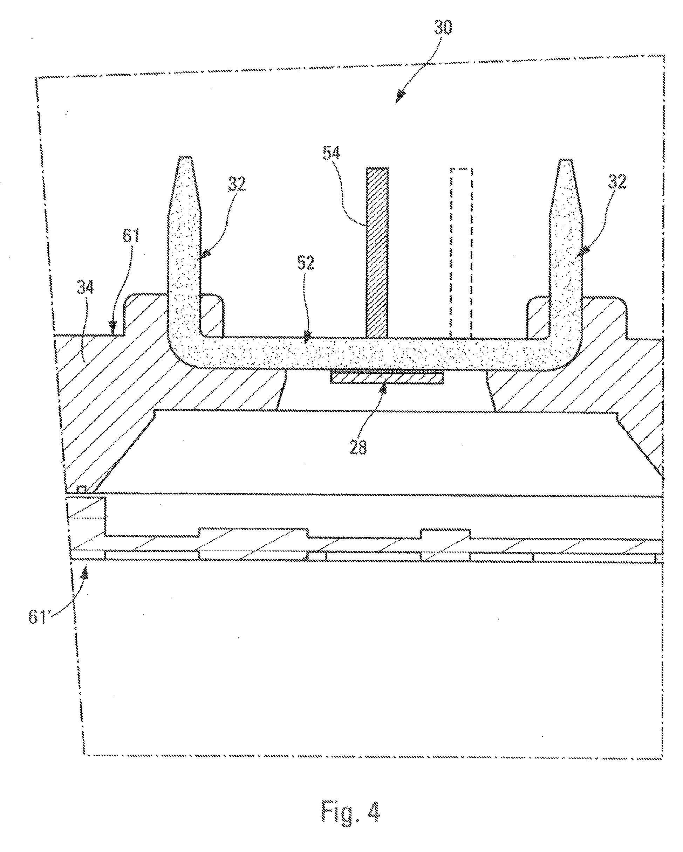

Selon l'exemple de réalisation illustré aux figures 3 et 4, le dissipateur comprend, par exemple, deux dites ailes 32 de dissipation s'étendant depuis des bords latéraux de la base 52, de façon à présenter un profil en U. Le bord libre desdites ailes pourra être biseauté.

Selon une variante de réalisation, illustré aux figures 4 et 5, le dissipateur 30 comprend au moins une ailette de dissipation de chaleur supplémentaire 54, 55, 56 placée entre lesdites deux ailes de dissipation 32. Ladite aile supplémentaire 54 est, par exemple, située de façon médiane, c'est-à-dire juste au-dessus du circuit 28 pour mieux évacuer encore la chaleur et mieux refroidir le ou les composants électronique du circuit électronique. Autrement dit, le dissipateur présente un profil en E comme visible à la figure 4.

Il pourra être prévu au moins une autre aile de dissipation supplémentaire de chaleur. A la figure 4, une telle ailette supplémentaire est représentée en pointillés. A la figure 5, il est prévu deux autres ailettes de dissipation supplémentaire de dissipation de chaleur 55, 56, par exemple à mi-distance entre la première 54 et les ailes dissipation 32 s'étendant depuis les bords latéraux de la base 52 du dissipateur 30.

Ladite ailette médiane 54 pourra se prolonger axialement dans l'axe D au-delà de la base 52 du dissipateur 30 et ce en direction de l'ouverture centrale d'aspiration d'air pour mieux évacuer la chaleur. Dans une variante cette ailette médiane est encore prolongée axialement dans l'axe D vers l'intérieur pour s'étendre au-delà du support 34 et être placée en regard de cette ouverture centrale d'aspiration d'air. Une autre 56 des ailettes pourra présenter un prolongement 57 dirigé axialement vers l'intérieur parallèlement à l'axe D en sorte que ce prolongement est adapté à être placé en regard de l'ouverture centrale d'aspiration d'air. Dans un mode de réalisation le prolongement présente une extrémité interne perpendiculaire au support 34 comme visible à la figure 5. Ce prolongement est dirigé vers l'ouverture centrale d'aspiration d'air. Autrement dit, ladite ailette 56 présente un profil en L. Lesdites ailettes 54, 55, 56 présentent ainsi une longueur croissante.

Bien entendu tout dépend des applications, l'ailette médiane 54 présentant dans une variante une forme en L identique à celle de l'ailette 56. Toutes les combinaisons de forme et de nombre d'ailettes sont possibles.

Ledit dissipateur 30 est dans un mode de réalisation métallique, par exemple, réalisé en cuivre. Autrement dit, les composants du dissipateur, base 52 et/ou ailes de dissipation 32, 54 sont en cuivre. Il pourra s'agir d'une nuance de cuivre présentant un coefficient de conductivité situé entre 350 et 400 W/m.K et/ou un coefficient de dilatation thermique situé entre 15 et 20.

La base 52 du dissipateur et les ailes de dissipation 32 qui en sont issues pourront être obtenues par pliage.

Le dissipateur 30, en particulier sa base 52, est en contact avec le circuit électronique de commande 28, par exemple par colle argent. En variante le contact est indirect via un substrat.

La ou les ailettes de dissipation supplémentaires 54 pourront être rapportées sur la base 52 du dissipateur, par exemple par soudage laser. Elle ou elles présentent, notamment, une épaisseur plus faible que celle des ailes dilatations 32 issues de la base 52.

En variante la ou les ailettes sont rapportées sur la base en étant insérées chacune dans une rainure prévue dans la base 52. Dans ce cas la ou les ailettes sont en matériau caloporteur tout comme le dissipateur. Elles sont dans une matière identique à celle du dissipateur 30 ou en variante en matière différente, le dissipateur étant par exemple en cuivre et la ou les ailettes en aluminium ou toute autre matière permettant d'ajuster le transfert de chaleur. Bien entendu l'une des ailettes peut être en cuivre et la ou les autres ailettes en matière différente par exemple en Aluminium. Les rainures pourront être délimitées par une paire de nervures. Elles permettent de disposer d'un dissipateur standard auquel est ajouté un nombre plus ou moins grand d'ailettes en fonctions des besoins.

Si l'on se reporte de nouveau au mode de réalisation des figures 3 et 4, le support comprend, par exemple, une première partie 60, où le dissipateur 30 est situé et ladite première partie 60 présentant un bord latéral 62 équipé du porte-balais 50. Une ou des fentes 64 pourront alors prévues à travers le support 34 entre ladite première partie 60 et le ou lesdits logements porte-balais 50. Le support 34 recouvre dans ce mode de réalisation au moins une ouverture d'entrée d'air 118 du palier 17. La fente 64 est avantageusement implantée en regard d'une ouverture d'entrée d'air 118. On prévoit également un dégagement 164 au niveau de l'extrémité interne du porte balais. Ce dégagement ouvert vers l'intérieur affecte le bord latéral du dispositif 14 s'étendant entre l'oreille 44 et la périphérie interne du porte-balais 50. On augmente de la sorte le passage d'air et le refroidissement du porte-balais 50 et des balais.

Les ponts de matière 68 restant entre la première partie 60 et le porte-balais permettent d'assurer la liaison mécanique entre ces deux zones du dispositif régulateur 14 et le passage des traces électriques 29. A ce sujet des nervures de renfort 200 pourront être prévues entre la première partie 60 du support 34 et le porte-balais 50. Elles sont ici au nombre de deux. Elles sont situées de part et d'autre de la fente 64.

A la figure 2, seules les ailes de dissipation 12 et le porte-balais 50 du dispositif régulateur de tension 14 sont représentés en détail, les autres détails, en particulier les bornes de connexion ayant été omis pour simplification.

Selon une approche, ledit dispositif régulateur 14 comprend deux parties : une partie électronique avec le circuit électronique de commande 28 et les traces électriques 29 et une partie mécatronique avec le support 34 dont les cages porte-balais, équipées, ainsi que le dissipateur 30.

Ainsi qu'il ressort de ce qui précède et des dessins, les prolongements des ailettes 54, 56 sont dirigés vers une ouverture centrale de la machine, constituée par l'ouverture centrale d'aspiration d'air. Ces prolongements sont adaptés à être placés au moins entre le support 34 et ladite ouverture centrale, le prolongement 57 pénétrant dans cette ouverture centrale.

Le support 34 recouvre au moins partiellement une ouverture d'entrée d'air 118, tandis que dans ce mode de réalisation les ailettes du dissipateur de chaleur positif 100 autorisent un passage axial d'un flux d'air à travers les dites ouvertures comme représenté dans les figures 1 et 5 du document US 7 019 424 précité. Le passage à travers ces ouvertures 118 dépend des applications et de la forme du ou des ponts redresseurs de courant.

L'ouverture centrale d'aspiration d'air constitue une zone de dépression prévue entre le support 34 et la machine électrique tournante.

Grâce à l'orientation du dissipateur de chaleur on diminue la température du circuit électronique 28 en sorte que celui-ci reste en dessous de sa température limite. On rend ainsi la machine électrique tournante plus robuste et plus fiable, sachant que le dispositif régulateur de tension est plus sensible à l'élévation de température que le ou les ponts redresseurs de courant.

Grâce à l'invention on peut également diminuer la température du ou des logements des balais en sorte que le coulissement des balais est facilité.

Bien entendu on peut diminuer encore la température du dispositif régulateur de tension 14 en optimisant le flux d'air qui balaye le dissipateur de chaleur 30 et augmenter donc la capacité de dissipation de la chaleur notamment par convection.

Pour ce faire on modifie le capot de la figure 2 selon l'une au moins des caractéristiques suivantes :
- on change le positionnement des ouvertures du capot par rapport au dissipateur 30,
- on change la taille des ouvertures du capot par rapport au dissipateur,
- on rapproche le fond du capot par rapport au dissipateur,
- on crée des murets dans le capot autour du dissipateur.

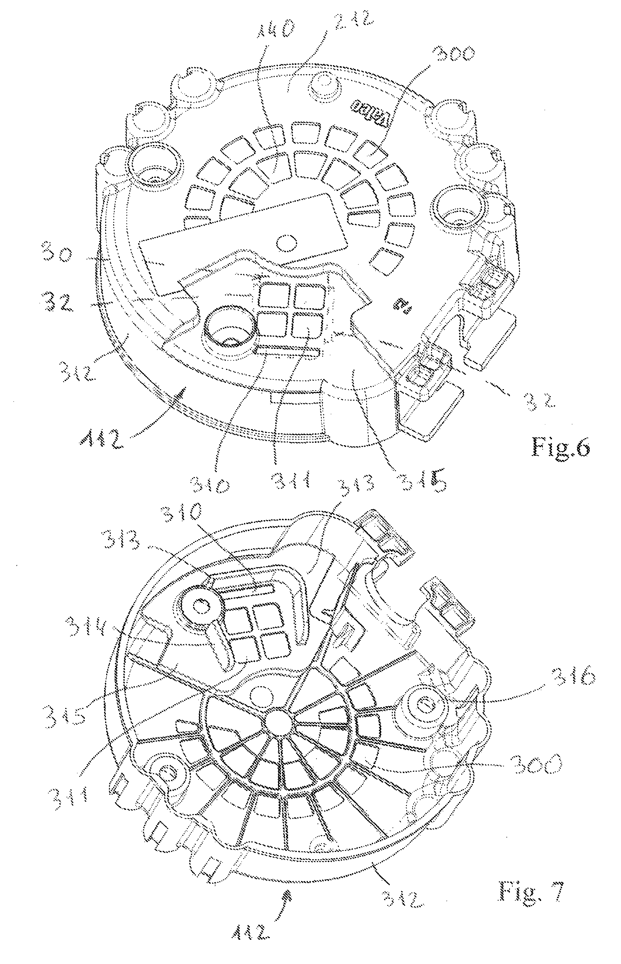

Ainsi comme visible dans le mode de réalisation des figures 6 et 7 le capot 112, de forme creuse, comporte comme celui de la figure 2 un fond 212 prolongé à sa périphérie externe par une jupe 312 afin de coiffer le pont redresseur de courant et le dispositif régulateur de tension 14.

On modifie les ouvertures du fond 212 du capot qui sont en regard du dissipateur 30. Ces ouvertures comportent quatre ouvertures 311, globalement de forme carré, qui sont en regard de la base 52 du dissipateur et de la ou les ailettes éventuelles supplémentaires 54, 55, 56 des figures 4 et 5. Les ouvertures 311 sont implantées entre les ailes 32 du dissipateur 30 représentées en pointillés à la figure 6. Il existe également une ouverture 310 destinée à venir en regard de la périphérie externe du dissipateur 30 à l'extérieur des ailles 32 et des éventuelles ailettes supplémentaires. L'ouverture 310 est donc pour ce faire de forme oblongue et de longueur globalement égale à deux fois la largeur d'une ouverture 311 augmentée de l'épaisseur de la bande de matière présente entre deux ouvertures 311.

Il ressort de ce qui précède que le positionnement des ouvertures 310, 311 est changé par rapport aux ouvertures (non référencées) de la figure 2. Le positionnement des ouvertures 310, 311 est fonction du positionnement est des orientation des ailes du dissipateur 30 selon l'invention.

Comme visible dans les figures 6 et 7 la taille des ouvertures 310, 3111 est changée par rapport à celle globalement identiques des ouvertures ( non référencés) du capot de la figure 2, la taille des ouvertures 311 étant plus grande.

Suivant une autre caractéristique on rapproche les ouvertures 310, 311 par rapport au dissipateur 30.

Pour ce faire les ouvertures 310, 311 sont réalisées dans une dépression 315 que comporte localement à cet effet le fond 212 du capot 112. On rapproche cette dépression 315 des ailes 32 du dissipateur 30.

Suivant une autre caractéristique on crée des murets 313, 314 positionnés autour du dissipateur 30. Ces murets 313, 314 de canalisation du flux d'air sont globalement en forme de U avec un fond 313 globalement parallèle à l'ouverture 310 et deux branches 314 parallèles aux ouvertures 310 comme visible à la figure 7 de sorte qu'un faible espace existe entre les ailes 32 et les branches 314. Un faible espace existe également entre le fond 313 et l'ouverture 310. Ces murets 313, 314 permettent de guider l'air, les surfaces des ouvertures 310, 311 étant maximisées et en regard du dissipateur 30 pour optimiser la convection naturelle. En outre on réduit la distance entre les ailes 32 et le fond 212 du capot. Bien entendu la taille des murets est fonction de celle des ailes 32 du dissipateur, les murets 313, 314 étant légèrement plus hauts que les ailes 32.

Le dissipateur 30 est donc logé au mois en partie dans une cavité du capot 112 Cette cavité est ouverte vers l'intérieur et délimitée par des murets 133, 134 et par un fond troué appartenant à une dépression 315 du fond 212 du capot. Les murets 313, 314, en forme de U sont issus de la dépression 315 en étant dirigés vers l'intérieur du capot.

L'ensemble de ces caractéristique permet de réduire encore la température du ou des composants électroniques 28. On améliore de manière significative la dissipation des calories du ou des composants électroniques 28, de sorte que l'on peut répondre à des applications de plus en plus chaudes (Températures ambiante de 125°).

Bien entendu le support 34 peut être réalisé dans tous les cas en polymère de haute performance, du PPS par exemple, pour réaliser une bonne isolation électrique, notamment du ou des composants 28, et obtenir une bonne résistance.

On notera que dans les figures 6 et 7 que le couvercle comporte trois canons (Non référencés) pour la fixation par vissage du capot au palier arrière. Il ressort des figures 6 et 7 que la dépression 315 n'affecte pas le porte-balais. Il est à noter que l'ouverture (non référencée) de la jupe 312 du capot est dédiée à la sortie de la borne B+ (500).

Pour augmenter encore la dissipation des calories on peut fractionner les ailes 32 pour optimiser encore le passage du flux d'air entre les murets 313, 314 et les ailes 32.

Ainsi dans un mode de réalisation les ailes 132 (Figure 8) sont en forme de peigne. Cette disposition permet de créer des turbulences dans le flux d'air et une augmentation des surfaces d'échanges, le dissipateur pouvant bien entendu être équipé de ou des ailettes supplémentaires 5 4 à 56, qui en variante pourront fractionnées par exemple en forme de peigne.

Ce type de dissipateur peut être associé en variante au capot de la figure 2.

Bien entendu l'épaisseur des ailes 32, 132 est en variante inférieure à l'épaisseur de la base 52 du dissipateur 30.

On notera que dans la figure 8 l'épaisseur de l'aile 132 est réduite à sa périphérie externe. Il en est de même des ailes 32 des figures 4 et 5. Cela est applicable aux ailettes 54 à 56.

Les ailes 32, 132 pourront donc être effilées à leur périphérie externe.

Bien entendu le capot peut être métallique ou en matière plastique. Les ouvertures 311 ont en variante une autre forme. Ainsi en variante les ouvertures 311 sont de forme rectangulaire ou polygonale.

## Revendications

1. Dispositif régulateur de tension pour une machine électrique tournante, notamment alternateur et/ou alterno-démarreur de véhicule automobile, ladite machine électrique tournante étant munie d'une ouverture centrale d'aspiration d'air, ledit dispositif régulateur (14) comprenant un ou plusieurs composants électroniques (28), aptes à participer à la commande de ladite machine électrique, un dissipateur (30) de chaleur, présentant des ailes de dissipation (32, 132), parallèles, ledit dissipateur étant en relation d'échange thermique avec le ou lesdits composants, et un support (34) sur lequel ledit dissipateur est positionné, **caractérisé en ce que** ledit support est apte à être monté sur la machine électrique de façon à ce que les ailes du dissipateur puissent orienter un flux d'air vers une zone de dépression prévue entre ledit support et ladite machine, l'ouverture centrale d'aspiration d'air constituant ladite zone de dépression.

2. Dispositif selon la revendication 1 dans lequel le dissipateur comprend une base (52), en relation d'échange thermique avec le ou lesdits composants électroniques, lesdites ailes s'étendent à partir de ladite base.

3. Dispositif selon la revendication 2 dans lequel lesdites ailes s'étendent sensiblement perpendiculairement par rapport à ladite base, ledit dissipateur présentant un axe D, parallèle aux ailes, orienté vers ladite zone de dépression.

4. Dispositif selon la revendication 3 dans lequel le support comprend en outre un porte-balais muni d'au moins un logement (50), dit logement porte-balai, orienté selon une direction D', apte à accueillir un balai permettant d'établir une liaison électrique avec un rotor (3) de la machine électrique.

5. Dispositif selon la revendication 4 dans lequel l'axe D du dissipateur et l'axe D' du logement porte-balai forment un angle supérieur à 10°.

6. Dispositif selon la revendication 4 ou 5 dans lequel le dissipateur comprend deux dites ailes de dissipation s'étendant depuis des bords latéraux de la base, de façon à présenter un profil en U.

7. Dispositif selon la revendication 6 dans lequel le dissipateur comprend au moins une ailette de dissipation supplémentaire (54, 55, 56) placée entre lesdites deux ailes.

8. Dispositif selon la revendication 7 dans lequel la ou lesdites ailettes (55, 56) se prolongent axialement vers l'intérieur au-delà de la base.

9. Dispositif selon la revendication 7 dans lequel la ou lesdites ailettes présentent un prolongement adapté à être placé en regard d'une ouverture centrale d'entrée d'air de ladite machine électrique,

10. Dispositif selon la revendication 9 dans lequel le prolongement est apte à être placé entre ledit support et l'ouverture centrale de ladite machine électrique.

11. Dispositif selon la revendication 10 dans lequel la ou lesdites ailettes (56) présentent une forme globalement en forme de L.

12. Dispositif selon l'une quelconque des revendications 4 à 11 dans lequel le support comprend une première partie (60), où le dissipateur est situé, ladite première partie présentant un bord latéral (62) équipé dudit porte-balais, et dans lequel une ou des fentes (64) sont prévues à travers le support entre ladite première partie et le ou lesdits porte-balais.

13. Palier de machine électrique tournante équipé d'un dispositif régulateur selon l'une quelconque des revendications précédentes.

14. Palier selon la revendication 13 comprenant en outre un dispositif de redressement du courant produit par ladite machine électrique pour formation d'un agencement de redressement de courant (200-14) comportant une ouverture centrale, ladite zone de dépression étant située au niveau de la dite ouverture.

15. Machine électrique tournante équipée d'un palier selon l'une quelconque des revendications 13 ou 14.

## Patentansprüche

1. Spannungsreglervorrichtung für eine drehende elektrische Maschine, insbesondere Kraftfahrzeug-Lichtmaschine und/oder -Anlasser, wobei die drehende elektrische Maschine mit einer zentralen Luftansaugöffnung ausgestattet ist, wobei die Reglervorrichtung (14) ein oder mehrere Elektronikbauelemente (28) umfasst, die für die Teilnahme an der Steuerung der elektrischen Maschine geeignet sind, einen Kühlkörper (30), der parallele Kühlrippen (32, 132) aufweist, wobei der Kühlkörper im Wärmeaustausch mit dem oder den Bauelementen ist, und einen Träger (34), auf dem der Kühlkörper angeordnet ist, **dadurch gekennzeichnet, dass** der Träger geeignet ist, in einer Weise auf der elektrischen Maschine angebracht zu werden, dass die Rippen des Kühlkörpers eine Luftströmung zu einem zwischen dem Träger und der Maschine vorgesehenen Unterdruckbereich ausrichten können, wobei die zentrale Luftansaugöffnung den Unterdruckbereich bildet.

2. Vorrichtung nach Anspruch 1, in der der Kühlkörper eine Grundplatte (52) umfasst, die mit dem oder den Elektronikbauelementen im Wärmeaustausch ist, wobei die Rippen sich von der Grundplatte aus erstrecken.

3. Vorrichtung nach Anspruch 2, in der die Rippen sich im Wesentlichen rechtwinklig in Bezug auf die Grundplatte erstrecken, wobei der Kühlkörper eine zu den Rippen parallele Achse D aufweist, die zu dem Unterdruckbereich ausgerichtet ist.

4. Vorrichtung nach Anspruch 3, in der der Träger außerdem einen zumindest mit einem Gehäuse (50) ausgestatteten Bürstenhalter umfasst, so genanntes Bürstenhaltergehäuse, das gemäß einer Richtung D' ausgerichtet und, geeignet ist, eine Bürste aufzunehmen, die eine elektrische Verbindung mit einem Rotor (3) der elektrischen Maschine aufzubauen erlaubt.

5. Vorrichtung nach Anspruch 4, in der die Achse D des Kühlkörpers und die Achse D' des Bürstenhaltergehäuses einen Winkel größer als 10° bilden.

6. Vorrichtung nach Anspruch 4 oder 5, in der der Kühlkörper zwei so genannte Kühlrippen umfasst, die sich von seitlichen Kanten der Grundplatte in einer Weise erstrecken, die ein U-Profil darstellt.

7. Vorrichtung nach Anspruch 6, in der der Kühlkörper zumindest eine zwischen den zwei Rippen platzierte Zusatzkühlrippe (54, 55, 56) umfasst.

8. Vorrichtung nach Anspruch 7, in der die Rippe oder die Rippen (55, 56) sich axial nach innen über die Grundplatte hinaus erstrecken.

9. Vorrichtung nach Anspruch 7, in der die Rippe oder die Rippen eine Verlängerung aufweisen, die geeignet ist, gegenüber einer zentralen Lufteintrittsöffnung der elektrischen Maschine platziert zu werden.

10. Vorrichtung nach Anspruch 9, in der die Verlängerung geeignet ist, zwischen den Träger und die zentrale Öffnung der elektrischen Maschine platziert zu werden.

11. Vorrichtung nach Anspruch 10, in der die Rippe oder die Rippen (56) allgemein L-förmig sind.

12. Vorrichtung nach einem der Ansprüche 4 bis 11, in der der Träger einen ersten Teil (60) umfasst, in dem der Kühlkörper angeordnet ist, wobei der erste Teil eine seitliche Kante (62) aufweist, die mit dem Bürstenhalter ausgestattet ist, und in der eine oder mehrere Spalten (64) durch den Träger zwischen dem ersten Teil und dem oder den Bürstenhaltern vorgesehen sind.

13. Lager einer mit einer Reglervorrichtung nach einem der vorhergehenden Ansprüche ausgestatteten drehenden elektrischen Maschine.

14. Lager nach Anspruch 13, das außerdem eine Vorrichtung des Gleichrichtens des durch die elektrische Maschine erzeugten Stroms zur Ausbildung einer Anordnung von Stromgleichrichtung (200 - 14) umfasst, die eine zentrale Öffnung aufweist, wobei der Unterdruckbereich auf der Ebene der Öffnung angeordnet ist.

15. Drehende elektrische Maschine, die mit einem Lager nach einem der Ansprüche 13 oder 14 ausgestattet ist.

## Claims

1. Voltage regulation device for a rotating electric machine, specifically an alternator and/or alternator-starter in a motor vehicle, wherein said rotating electric machine is provided with a central air intake opening, said regulation device (14) comprising one or more electronic components (28) which are designed to participate in the control of said electric machine, a thermal dissipator (30) provided with parallel dissipation fins (32, 132), wherein said dissipator is in a thermal exchange arrangement with said component(s), and a support (34) upon which said dissipator is mounted, **characterized in that** said support is designed for mounting on the electric machine such that the dissipation fins can direct an air flux towards a pressure reduction zone, arranged between said support and said machine, wherein the central air intake opening constitutes said pressure reduction zone.

2. Device according to Claim 1, wherein the dissipator comprises a base (52) in a thermal exchange arrangement with said electronic component(s), wherein said fins extend from said base.

3. Device according to Claim 2, wherein said fins extend essentially perpendicularly in relation to said base, wherein said dissipator has an axis D, parallel to the fins, oriented towards said pressure reduction

4. Device according to Claim 3, wherein said support also comprises a brush-holder provided with at least one receptacle (50), described as a brush-holder receptacle, oriented in direction D', designed for the accommodation of a brush for the establishment of an electrical connection with a rotor (3) of the electric machine.

5. Device according to Claim 4, wherein the axis D of the dissipator and the axis D' of the brush-holder receptacle form an angle greater than 10°.

6. Device according to Claim 4 or 5, wherein the dissipator comprises two said dissipation fins, extending from the lateral edges of the base, thereby forming a U-shaped profile.

7. Device according to Claim 6, wherein the dissipator comprises at least one supplementary dissipation vane (54, 55, 56) arranged between said two fins.

8. Device according to Claim 7, wherein said vane(s) (55, 56) extend axially towards the interior, beyond the base.

9. Device according to Claim 7, wherein said vane(s) are provided with an extension which is designed to be arranged adjacently to a central air inlet opening in said electric machine.

10. Device according to Claim 9, wherein the extension is designed to be arranged between said support and the central opening in said electric machine.

11. Device according to Claim 10, wherein said vanes (56), in combination, form an overall L-shape.

12. Device according to one of Claims 4 to 11, wherein the support comprises a first part (60), where the dissipator is situated, wherein said first part is provided with a lateral edge (62), equipped with said brush-holder, and wherein one or more slots (64) are arranged through the support between said first part and said brush-holder(s).

13. Bearing in a rotating electric machine, equipped with a regulation device according to one of the preceding claims.

14. Bearing according to Claim 13, also comprising a device for the rectification of the current generated by said electric machine, thereby forming a current rectification arrangement (200-14) comprising a central opening, wherein said pressure reduction zone is arranged at the level of said opening.

15. Rotating electric machine equipped with a bearing according to either of Claims 13 or 14.
